# FASCICULE DE BREVET EUROPEEN

(11) **EP 0 581 660 B1**
(45) Date de publication et mention de la délivrance du brevet: **08.05.1996**
(21) Numéro de dépôt: 93401929.0
(22) Date de dépôt: 23.07.1993
(51) Int. Cl.: F16P 3/10, H01H 17/00, H01H 3/02

(54) **Dispositif de commande par câble utilisable pour effectuer des arrêts d'urgence d'une installation**
Seilbetätigte Schnellabschaltvorrichtung
Cord-operated device for emergency turn-off

(30) Priorité: 29.07.1992 FR 9209357
(43) Date de publication de la demande: 02.02.1994
(73) Titulaire: SCHNEIDER ELECTRIC SA, F-92100 Boulogne-Billancourt (FR)
(72) Inventeur: Berthaud, Denis, F-16470 Saint Michel (FR)
(74) Mandataire: Carias, Alain

(56) Documents cités:
- DE-B- 2 935 420
- FR-A- 2 629 258

## Description

La présente invention concerne un dispositif de commande par câble utilisable notamment, mais non exclusivement, pour effectuer des arrêts d'urgence d'une installation.

On sait qu'il a déjà été proposé des dispositifs de ce genre faisant intervenir un ressort dont une extrémité est retenue par une structure fixe et dont l'autre extrémité est solidaire d'un équipage mobile guidé sur ladite structure et sur lequel est fixée l'extrémité d'un câble de commande tendu dans la zone à protéger. Un dispositif de transmission, comprenant une structure oscillante de préférence verrouillable et infraudable, assure la commande d'un interrupteur en réponse à un coulissement, dans un sens ou dans l'autre, de l'équipage mobile à la suite d'une traction effectuée par le câble ou à un relâchement dû, par exemple, à une rupture de ce dernier.

Dans un mode d'exécution d'un dispositif de ce genre, décrit dans le brevet FR 2 629 258 au nom de LA TELEMECANIQUE ELECTRIQUE, le dispositif de transmission fait intervenir un doigt coopérant avec deux rampes solidaires de l'équipage mobile.

Habituellement, ces dispositifs de commande font en outre intervenir un déclencheur nécessitant un réarmement après chaque commutation de l'interrupteur, de manière à rendre dissuasifs les actionnements injustifiés, voire malveillants, du câble entraînant des perturbations furtives du fonctionnement de l'installation.

Bien entendu, des dispositions doivent être prises pour assurer l'infraudabilité de l'interrupteur et faire en sorte qu'après un déclenchement, seule la manoeuvre de réarmement puisse le ramener en position initiale (habituellement fermée).

L'invention a plus particulièrement pour but de parvenir à ces résultats au moyen d'un dispositif de conception simple, mais cependant très sûr et qui puisse en outre assurer :
- une cinématique permettant de réduire les risques de défauts de fonctionnement dus, par exemple, à la présence de poussières, à la corrosion de portées coulissantes, à la disparition d'un lubrifiant, etc ... étant entendu que le dispositif n'est appelé à fonctionner que très rarement et, qu'en conséquence, les périodes de repos entre deux actionnements peuvent être très longues.

L'invention propose donc à cet effet un dispositif de commande par câble du type précité, caractérisé en ce que la susdite structure oscillante est montée pivotante sur la structure fixe autour d'un axe perpendiculaire à la direction de déplacement de l'équipage mobile entre une position armée et une position basculée, cette structure oscillante comprenant :
- un premier bras de levier disposé de manière à pouvoir venir en appui sur l'organe de commande de l'interrupteur lorsque la structure oscillante est en position basculée,
- au moins un deuxième bras de levier comprenant deux surfaces de came axialement distantes et opposées l'une par rapport à l'autre qui coopèrent avec un organe de butée solidaire de l'équipage mobile pour faire basculer la structure oscillante de sa position armée à sa position basculée, à la suite d'un déplacement de l'équipage mobile au-delà d'une course minimum, indépendamment du sens dudit déplacement,
- des moyens de réarmement aptes à agir sur la structure oscillante pour la ramener en position de repos,
- une liaison à rupture de charge entre ladite structure oscillante et la structure fixe qui s'oppose au basculement de la structure oscillante tant que la valeur du couple exercé par l'organe de butée est inférieure à un seuil prédéterminé et qui libère la structure oscillante lors du franchissement de ce seuil.

Avantageusement, la liaison à rupture de charge pourra comprendre un bras de levier solidaire de la structure oscillante dont deux faces radiales opposées présentent deux conformations respectives sensiblement sphériques, et deux butées effaçables solidaires de la structure fixe, disposées de part et d'autre dudit bras de levier de manière à agir sur lesdites conformations pour maintenir la structure oscillante en position armée tant que le couple exercé par ledit organe de butée est inférieur à un seuil prédéterminé.

A l'inverse, cette liaison à rupture de charge pourra faire intervenir deux butées effaçables montées sur le bras de levier et coopérant avec deux conformations respectives de la structure fixe, pour maintenir la structure oscillante en position armée dans les mêmes conditions que précédemment.

Les butées effaçables pourront consister en des billes sollicitées par des moyens élastiques. De même, en tant que conformation sphérique, on pourra utiliser des billes partiellement logées dans un réceptacle cylindrique et présentant une calotte sphérique ressortant dudit réceptacle.

Un mode d'exécution de l'invention sera décrit ci-après, à titre d'exemple non limitatif, avec référence aux dessins annexés dans lesquels :

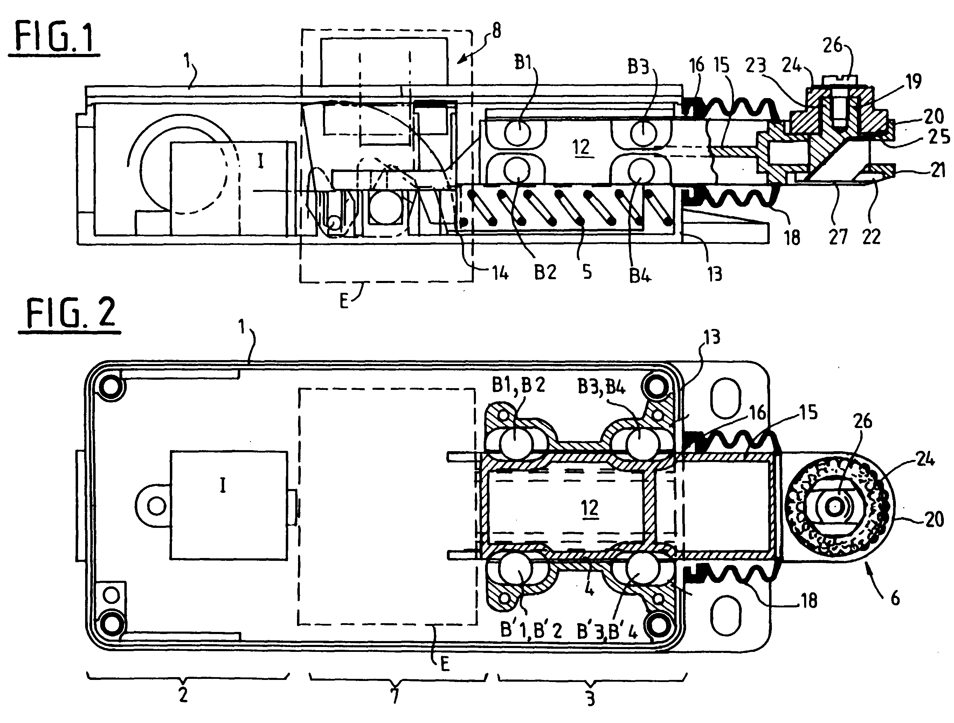

Les figures 1 et 2 sont deux vues en coupe (verticale figure 1 et horizontale figure 2) d'un dispositif de commande par câble selon l'invention ;
Les figures 3a, 3b, 3c sont des représentations schématiques permettant d'illustrer le principe de fonctionnement de la liaison à rupture de charge entre la structure oscillante et la structure fixe ;
La figure 4 est une représentation schématique, à plus grande échelle de la partie encadrée E en traits interrompus de la figure 2 ;
Les figures 5 à 8 sont des vues à plus grande échelle de la partie encadrée E de la figure 1, en position de repos, appareil réglé (figure 5), lors d'une légère traction de câble (infraudabilité figure 6), lors d'une franche traction du câble (figure 7) et lors d'une rupture du câble (figure 8) ;

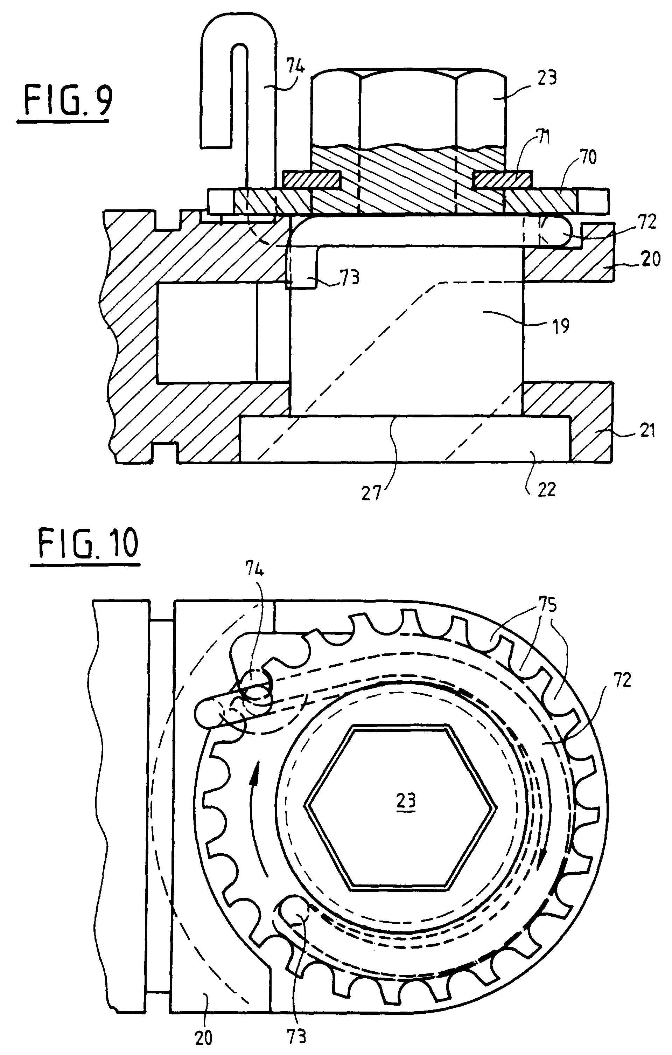

Les figures 9 et 10 sont des coupes, respectivement verticales et horizontales à plus grande échelle montrant une variante d'exécution "à rochet" du tendeur de câble.

Dans cet exemple, le dispositif de commande par câble comprend tout d'abord, en tant que partie fixe, un boîtier 1 de forme parallélépipédique, allongé selon un axe longitudinal et comprenant trois parties successives, à savoir :
- une première partie extrême 2, logeant un dispositif interrupteur I,
- une deuxième partie extrême 3, opposée à la première 2, logeant un chariot mobile 4, axialement guidé et sollicité par un ressort 5, ce chariot 4 comprenant, à l'une de ses extrémités qui ressort à l'extérieur du boîtier 1, des moyens de fixation d'un câble 6, et
- une partie centrale 7 renfermant un mécanisme de transmission permettant d'actionner l'interrupteur I à partir d'un déplacement du chariot 4 et un mécanisme de réarmement 8.

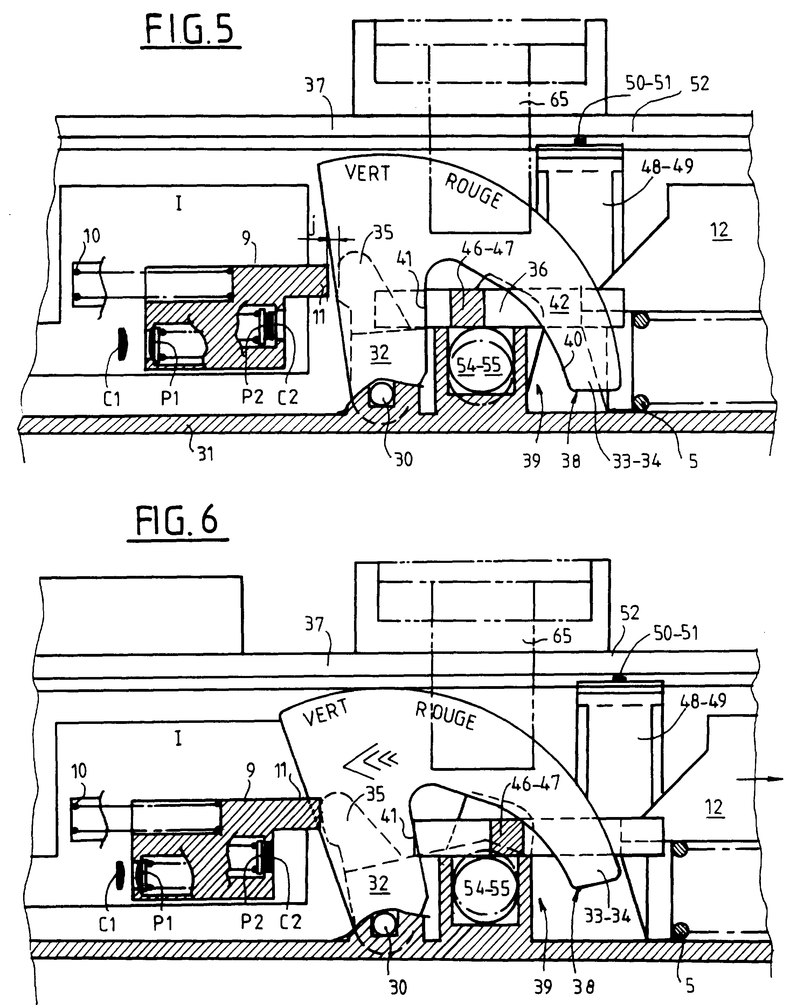

Le dispositif interrupteur I peut être d'un type quelconque, actionné par exemple par un poussoir. Dans l'exemple représenté sur les figures 5 à 8, il comprend un équipage mobile 9 (râteau) rappelé par ressort 10 et portant deux ponts de contacts mobiles P₁, P₂ coopérant avec deux paires de contacts fixes C₁, C₂ pour réaliser deux contacts à double coupure respectivement à ouverture et à fermeture. L'actionnement de l'équipage mobile 9 s'effectue à l'aide d'un poussoir 11 orienté vers le mécanisme de transmission.

Le chariot 4 comprend un corps parallélépipédique 12 d'épaisseur sensiblement égale à la moitié de l'épaisseur du boîtier 1 et monté coulissant dans la partie supérieure de ce dernier grâce à un système de roulement à billes faisant intervenir huit billes B₁-B₄, B'₁-B'₄ logées dans des cavités oblongues formées à la fois dans le boîtier 1 et dans le corps 12 du chariot 4, qui servent d'éléments de guidage.

Le volume intérieur du boîtier 1, situé en-dessous du chariot 4 est partiellement occupé par le ressort de pression 5 qui est comprimé entre la paroi transversale 13 du boîtier 1 et une aile 14 du chariot 4 située à l'extrémité de celui-ci adjacente à la partie centrale 7.

Le corps 12 du chariot 4 est prolongé, d'un côté par une pièce de transmission 15, qui passe au travers d'une ouverture 16 prévue dans la paroi transversale 13 et porte, dans sa partie extérieure au boîtier, les moyens de fixation du câble, ici un tendeur de câble 6.

L'étanchéité au niveau du passage de cette pièce de transmission 15, au travers de la paroi 13 est assurée au moyen d'un soufflet 18.

Le tendeur de câble 6 comprend une pièce cylindrique 19 faisant office de cabestan, montée rotative dans deux perçages coaxiaux réalisés dans les deux ailes parallèles 20, 21 d'une chape formée à l'extrémité de la pièce de transmission 15. Cette pièce cylindrique 19 comprend, d'un côté un collet de retenue 22 (venant en appui sur l'aile 21) et, de l'autre côté, un prolongement axial 23 muni d'un perçage coaxial taraudé, autour duquel est disposé un manchon cranteur dont une face radiale crantée 25 vient en appui sur une zone annulaire crantée prévue sur l'aile 20.

Ce manchon cranteur 24 sert à obtenir un blocage de la pièce cylindrique 19, quelle que soit sa position angulaire, par vissage d'une vis 26 dans le perçage, la force d'application des deux crantages étant assurée par l'action de la tête de la vis 26 sur la face radiale externe du manchon 24.

Dans cet exemple, l'extrémité du câble sur le cabestan est engagée dans un perçage coudé 27 débouchant sur la face cylindrique et sur la face radiale de la pièce cylindrique 19.

Le mécanisme de transmission logé dans la partie centrale 7 du boîtier 1 fait intervenir une structure oscillante, montée rotative autour d'un axe transversal 30 solidaire de la face inférieure 31 du boîtier 1 et comprenant :
- un corps central 32 qui s'étend transversalement à l'intérieur du boîtier le long de l'axe 30 autour duquel il est articulé,
- deux flasques latéraux parallèles 33, 34, en forme de secteur circulaire qui s'étendent coaxialement dans deux plans perpendiculaires à l'axe 30, à chacune des extrémités du corps 32,
- un levier 35 solidaire de la partie centrale du corps 32, qui est destiné à l'actionnement du poussoir 11 du dispositif interrupteur I, et
- un deuxième levier 36 faisant partie de la liaison à rupture de charge prévue entre la structure oscillante et le boîtier 1.

Le bord circulaire des ailes latérales comprend deux zones successives présentant des couleurs différentes (ici vert-rouge), visibles à travers une fenêtre transparente 37 prévue dans le boîtier 1 : ces zones colorées permettent notamment d'indiquer l'état (actionné ou non) du dispositif interrupteur.

La face radiale 38 de chacun des flasques 33, 34, qui se trouve située du côté du chariot 4 est munie d'une échancrure 39 comprenant, axialement opposés :
- un bord circulaire 40 sensiblement parallèle à la face cylindrique du secteur et formant une rampe oblique par rapport à l'axe de déplacement du chariot 4 (axe longitudinal du boitier), et
- un bord droit 41 sensiblement perpendiculaire à la face radiale 38.

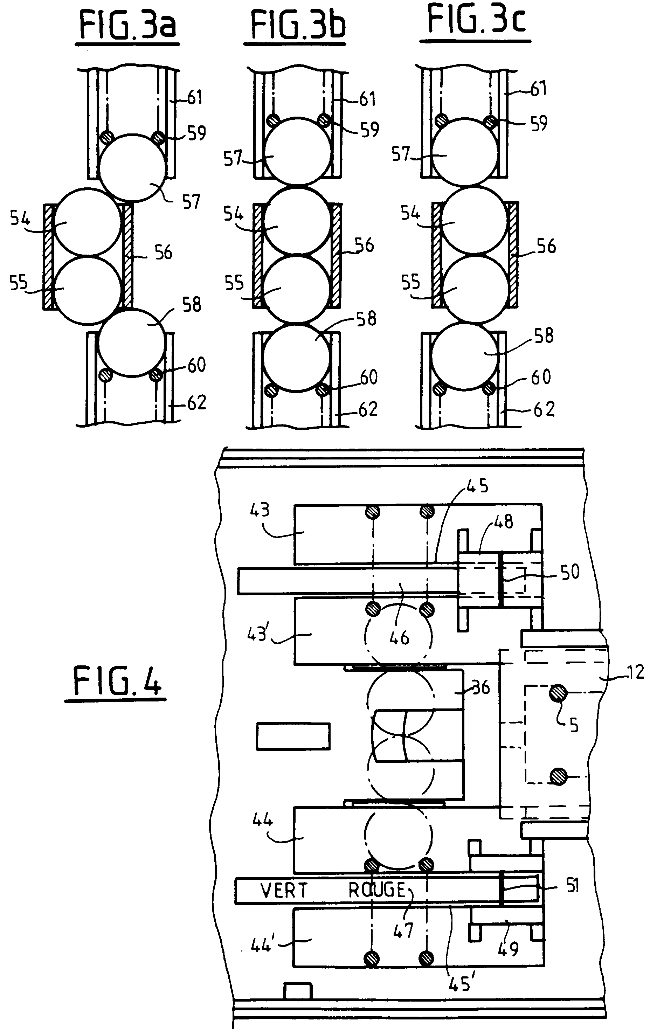

L'extrémité du chariot 4, située du côté de la partie centrale 7 du boîtier 1, est prolongée par une pièce de transmission 42 en forme de fourche comprenant deux platines 43, 44 (figure 4) qui s'étendent de part et d'autre du levier 36 et comprennent chacune une fente longitudinale 45, 45' par laquelle passe et peut librement pivoter un flasque latéral 33, 34 correspondant. Chaque couple de platines 43, 43' - 44, 44' porte un doigt d'entraînement 46, 47 qui traverse sa fente 45, 45' en passant par l'échancrure 39 du flasque latéral correspondant 33, 34 ainsi qu'une pièce de support 48, 49, portant un index de réglage 50, 51, visible au travers d'une fenêtre transparente 52 prévue dans le boîtier.

La liaison à rupture de charge prévue entre la structure oscillante fait intervenir, visibles sur les figures 3a à 3c :
- d'une part, deux billes 54, 55 partiellement engagées dans un perçage cylindrique 56 axé parallèlement à l'axe 30, formé dans le levier 36, la longueur de ce perçage 56 étant inférieure à la somme des diamètres des billes 54, 55 de manière à ce que celles-ci dépassent de chaque côté du perçage 56,
- d'autre part, deux billes 57, 58 sollicitées par deux ressorts respectifs 59, 60, et disposées dans deux gorges respectives 61, 62 axées parallèlement à l'axe 30 et situées de part et d'autre du volume de passage des billes 54, 55 de manière à ce qu'au repos les billes 57, 58 s'engagent dans ledit volume et puissent agir sur les billes 54, 55 à la façon de butées effaçables pour maintenir la structure oscillante en position de repos.

Dans cet exemple, les gorges 61, 62 qui servent également de logement pour les ressorts 60, 61 sont refermées par les platines 43, 43' - 44, 44'.

Le fonctionnement du dispositif précédemment décrit sera expliqué ci-après en regard des figures 5 à 8.

En fonctionnement normal (armé), le dispositif se trouve dans la position représentée sur la figure 5, position dans laquelle :
- le chariot 12, tenu sous tension par le câble, contre l'action du ressort 5, occupe une position dite "centrale",
- l'index de réglage 50, 51 se trouve au centre de la fenêtre de visualisation 52,
- le doigt d'entraînement 46, 47 de chacune des platines 43, 43' - 44, 44' s'étend dans la région centrale de l'échancrure 39 sans contact avec les bords 40, 41,
- la structure oscillante est maintenue en position de repos grâce à l'action des billes 57, 58 sur les billes 54, 55,
- le levier 35 se trouve disposé en regard et à légère distance (jeu j) du poussoir 11 du dispositif interrupteur I, lequel n'est donc pas sollicité et se trouve par exemple à l'état fermé,
- seule la zone colorée en vert est visible par la fenêtre 37 pour indiquer l'état (par exemple fermé) de l'interrupteur I.

A partir de cette position, une légère traction sur le câble provoque un déplacement du chariot vers la droite dans la position indiquée sur la figure 6.

Lors de ce déplacement, les doigts d'entraînement 46, 47 des platines 43, 43' - 44, 44' sont venus en appui sur les bords circulaires 40 des échancrures 39 correspondantes et ont provoqué un basculement de la structure oscillante dans un sens anti horaire. Au cours de ce basculement, les billes 57, 58 se sont effacées (figure 3b) pour laisser le passage aux billes 54, 55, puis ont repris à nouveau la position qu'elles occupaient initialement en s'opposant au retour de la structure oscillante en position de repos (figures 3a et 6 puis 7) (6 étant une position instable).

Du fait de la rotation de la structure oscillante, le levier 35 vient en appui sur le poussoir 11 du dispositif interrupteur I en provoquant son changement d'état.

Cette position peut être détectée même dans le cas où l'effort de traction effectué sur le câble a cessé et où le chariot est revenu en position initiale.

En effet, dans ce cas, la structure oscillante maintenue dans la position angulaire représentée sur la figure 6 ne pourra en aucun cas rester dans cette position, en raison de l'action des billes 57, 58 sur les billes 54, 55 (position de déséquilibre correspondant à l'alignement des quatre billes, figure 3b). En conséquence, le levier 35 vient en appui sur le poussoir 11 ou retourne en position de repos.

Cette particularité garantit une infraudabilité totale du dispositif car à chaque dépassement des points d'alignement des billes correspond un changement d'état.

Le retour de la structure oscillante à la position de repos illustrée figure 5, ne pourra être obtenu qu'au moyen d'un dispositif de réarmement constitué ici par un poussoir 65, rappelé par ressort qui, lorsqu'il est sollicité (vers le bas) agit sur le levier 36 de la structure oscillante. Bien entendu, l'effort appliqué sur ce poussoir 65 doit être suffisant pour provoquer l'effacement des billes 57, 58.

Dans le cas où il se produit une rupture du câble, le chariot 12, sollicité par le ressort 5, est repoussé vers la gauche de la figure jusqu'à ce qu'il vienne en butée fin de course contre une paroi du boîtier 1.

Au cours de ce déplacement, les doigts d'entraînement 46, 47 viennent en appui sur les bordures rectilignes 41 des flasques 33, 34 en provoquant un basculement en sens anti horaire de la structure oscillante après avoir provoqué l'effacement des billes 57, 58. En basculant, le levier 35 agit sur le poussoir 11 en provoquant ainsi un changement d'état du dispositif interrupteur I (ouverture positive).

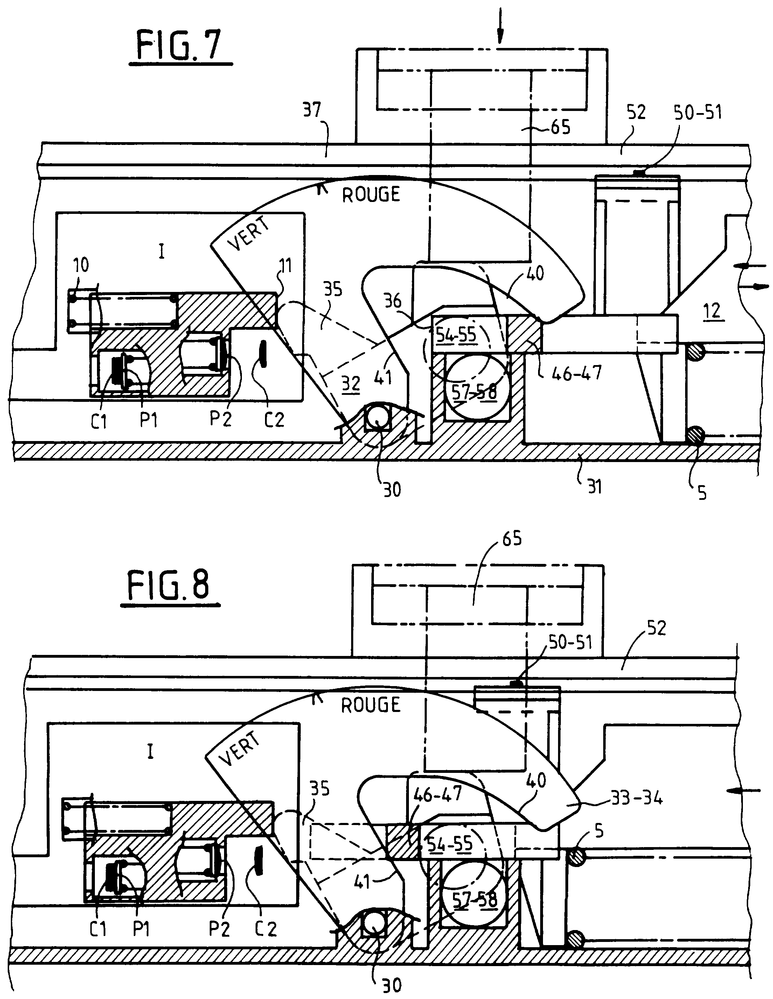

Cette position, visible sur la figure 8, peut être détectée par le fait que seule la zone colorée (rouge) est visible au travers de la fenêtre 37 et que l'index de réglage 50, 51 est disposé au niveau de la bordure gauche de la fenêtre 52.

Il convient de noter à ce sujet que les index de réglage 50, 51 servent avant tout à régler la position axiale du chariot 12 en position de repos (armée) telle qu'illustrée sur la figure 5.

Ce réglage est obtenu très simplement en faisant tourner la partie cylindrique 19 du tendeur de câble 6 (le câble étant tendu) jusqu'à ce que l'index 50, 51 soit disposé au centre de la fenêtre 52.

On procède ensuite au blocage de la partie cylindrique en effectuant le vissage de la vis 26 de manière à engager fermement les crantages 25 du manchon 24 dans les crantages de l'aile 20.

L'invention ne se limite pas aux dispositions précédemment décrites.

Ainsi, le tendeur de câble pourrait comprendre un système de verrouillage à rochet faisant intervenir, au lieu du manchon cranteur 24, une roue à rochet 70 solidaire en rotation du prolongement axial 23 de la pièce cylindrique 19 et maintenue appliquée contre l'aile 20 de la chape grâce à un circlip 71 qui s'engage dans une gorge annulaire prévue sur ledit prolongement 23. Cette roue à rochet 70 coopère avec un ressort 72 formant une spire qui s'étend concentriquement à la pièce 19, dont une extrémité 73 vient s'ancrer dans l'aile 20 de la chape tandis que l'autre extrémité comprend une portion repliée 74 qui s'étend axialement pour venir en prise dans une échancrure 75 de la roue à rochet 70 de manière à assurer un blocage en rotation, dans un sens, de la pièce 19. Le déverrouillage s'obtient alors en exerçant sur la portion 74 un effort en sens inverse, de manière à l'extraire de l'échancrure 75 dans laquelle elle se trouve engagée. A cet effet, la portion 73 présente une longueur suffisante pour faire office de poignée de déverrouillage.

Avantageusement, le prolongement axial 23 de la partie de la pièce cylindrique qui porte la roue à rochet 70 présente une section polygonale (par exemple hexagonale) pour permettre son entraînement en rotation au moyen d'une clé de type classique.

## Revendications

1. Dispositif de commande par câble utilisable pour effectuer des arrêts d'urgence d'une installation, ce dispositif faisant intervenir un ressort (5) dont une extrémité est retenue par une structure fixe (1) et dont l'autre extrémité est solidaire d'un équipage mobile (12), guidé sur ladite structure et sur lequel est fixée l'extrémité d'un câble de commande, et un dispositif de transmission comprenant une structure oscillante qui assure la commande d'un interrupteur (I) en réponse à un déplacement de l'équipage mobile (12) à la suite d'une traction effectuée par le câble ou à un relâchement de ce dernier,
caractérisé en ce que ladite structure oscillante est montée pivotante sur la structure fixe autour d'un axe (30) perpendiculaire à la direction de déplacement de l'équipage mobile (12) entre une position armée et une position basculée, cette structure oscillante comprenant :
- un premier bras de levier (35) disposé de manière à pouvoir venir en appui sur l'organe de commande (11) de l'interrupteur (I) lorsque la structure oscillante est en position basculée,
- au moins un deuxième bras de levier comprenant deux surfaces de came (40, 41) axialement distantes et opposées l'une par rapport à l'autre qui coopèrent avec un organe de butée (46, 47) solidaire de l'équipage mobile (12) pour faire basculer la structure oscillante de sa position armée à sa position basculée, à la suite d'un déplacement de l'équipage mobile (12) au-delà d'une course minimum, indépendamment du sens dudit déplacement,
- une liaison à rupture de charge (54-62) entre ladite structure oscillante et la structure fixe (1) qui s'oppose au basculement de la structure oscillante tant que la valeur du couple exercé par l'organe de butée est inférieure à un seuil prédéterminé qui libère la structure oscillante lors du franchissement de ce seuil, et qui s'oppose ensuite au retour de cette structure en position armée,
- des moyens de réarmement (65) aptes à agir sur la structure oscillante pour la ramener en position de repos, à l'encontre de l'action exercée par la liaison à rupture de charge.

2. Dispositif selon la revendication 1,
caractérisé en ce que la liaison à rupture de charge comprend un bras de levier (36) solidaire de la structure oscillante dont deux faces radiales opposées présentent deux conformations respectives (54, 55) sensiblement sphériques, et deux butées effaçables (57, 58) solidaires de la structure fixe, disposées de part et d'autre dudit bras de levier (36) de manière à agir sur lesdites conformations pour maintenir la structure oscillante en position armée tant que le couple exercé par ledit organe de butée est inférieur à un seuil prédéterminé.

3. Dispositif selon la revendication 1,
caractérisé en ce que la liaison à rupture de charge comprend deux butées effaçables (57, 58) montées sur le bras de levier (36) et coopérant avec deux conformations respectives de la structure fixe, pour maintenir la structure oscillante en position armée tant que le couple exercé par ledit organe de butée (46, 47) est inférieur à un seuil prédéterminé.

4. Dispositif selon l'une des revendications précédentes,
caractérisé en ce que les butées effaçables consistent en des billes (57, 58) sollicitées par des moyens élastiques (59, 60).

5. Dispositif selon l'une des revendications précédentes,
caractérisé en ce que les conformations sphériques consistent en des billes partiellement logées dans un réceptacle cylindrique et présentant une calotte sphérique ressortant dudit réceptacle.

6. Dispositif selon l'une des revendications précédentes,
caractérisé en ce que le susdit deuxième bras de levier consiste en un flasque (32, 33) en forme de secteur circulaire dont la face radiale (38) située du côté de l'équipage mobile comprend une échancrure (39) dont deux bords opposés (40, 41) constituent les susdites surfaces de came.

7. Dispositif selon la revendication 6,
caractérisé en ce que le bord circulaire du susdit flasque (32, 33) porte des indications (couleur rouge, couleur verte) relatives à l'état du susdit interrupteur, ces indications étant visibles au travers d'une fenêtre (37) prévue dans la structure fixe.

8. Dispositif selon l'une des revendications précédentes,
caractérisé en ce que le susdit équipage mobile porte un index de réglage (50, 51), visible au travers d'une fenêtre (52) prévue dans la structure fixe.

9. Dispositif selon l'une des revendications précédentes,
caractérisé en ce que la fixation du câble sur l'équipage mobile est assurée par un tendeur de câble (6).

10. Dispositif selon la revendication 9,
caractérisé en ce que le tendeur de câble comprend une pièce cylindrique (19), montée rotative dans deux perçages coaxiaux réalisés dans les deux ailes parallèles (20, 21) d'une chape solidaire de l'équipage mobile et autour duquel le câble peut venir s'enrouler, cette pièce cylindrique étant retenue axialement sur lesdites ailes et comprenant un prolongement axial (23) muni d'un perçage taraudé, autour duquel est disposé un manchon cranteur dont une face radiale crantée (25) vient en appui sur une zone annulaire crantée d'une des deux ailes (20, 21), la force d'application des deux crantages étant assurée par la tête d'une vis (26) venant se visser dans ledit perçage taraudé.

11. Dispositif selon la revendication 9,
caractérisé en ce que le tendeur de câble comprend une pièce cylindrique (19), montée rotative dans deux perçages coaxiaux réalisés dans les deux ailes parallèles (20, 21) d'une chape solidaire de l'équipage mobile et autour duquel le câble peut venir s'enrouler, cette pièce cylindrique étant retenue axialement sur lesdites ailes et comprenant un prolongement axial (23) solidaire d'une roue à rochet (70) coopérant avec un ressort (72) pour assurer un blocage en rotation de la pièce cylindrique (19).

12. Dispositif selon l'une des revendications précédentes,
caractérisé en ce que le susdit équipage mobile consiste en un chariot (12) monté sur la structure fixe par l'intermédiaire de roulements sur billes (B₁-B₄, B'₁-B'₄).

## Patentansprüche

1. Vorrichtung zur Seilsteuerung, die zur Notabschaltung einer Anlage anwendbar ist, wobei diese Vorrichtung eine Feder (5), deren eines Ende von einer festen Struktur (1) gehalten wird und deren anderes Ende mit einem beweglichen Organ (12) fest verbunden ist, das auf der Struktur geführt wird und an dem das Ende eines Steuerseils befestigt ist, und eine Übertragungsvorrichtung verwendet, die eine Schwingstruktur enthält, welche einen Schalter (I) als Reaktion auf eine Verschiebung des beweglichen Organs (12) aufgrund einer Zugkraft, die vom Seil ausgeübt wird, oder aufgrund eines Nachlassens dieser Zugkraft steuert,
dadurch gekennzeichnet, daß die Schwingstruktur auf der festen Struktur zwischen einer gespannten Stellung und einer gekippten Stellung um eine Achse (30) schwenkbar montiert ist, die senkrecht zur Verschieberichtung des beweglichen Organs (12) liegt, wobei diese Schwingstruktur enthält:
- einen ersten Hebelarm (35), der so angeordnet ist, daß er gegen das Steuerorgan (11) des Schalters (I) anliegt, wenn die Schwingstruktur sich in der gekippten Stellung befindet,
- mindestens einen zweiten Hebelarm, der zwei Nockenflächen (40, 41) mit axialem Abstand und einander entgegengesetzt angeordnet aufweist, die mit einem Anschlagorgan (46, 47) zusammenwirken, das fest mit dem beweglichen Organ (12) verbunden ist, um nach einer Verschiebung des beweglichen Organs (12) über einen minimalen Hub hinaus die Schwingstruktur von ihrer gespannten Stellung in ihre gekippte Stellung zu bringen, unabhängig von der Richtung der Verschiebung,
- eine Verbindung mit Lastunterbrechung (54-62) zwischen der Schwingstruktur und der festen Struktur (1), die sich dem Kippen der Schwingstruktur entgegensetzt, solange der Wert des vom Anschlagorgan ausgeübten Drehmoments unter einer vorbestimmten Schwelle liegt, die die Schwingstruktur bei Überschreiten dieser Schwelle freigibt, und die sich dann der Rückkehr dieser Struktur in die gespannte Stellung widersetzt,
- Mittel zum Wiederspannen (65), die auf die Schwingstruktur einwirken können, um sie gegen die von der Verbindung mit Lastunterbrechung ausgeübte Wirkung in die Ruhestellung zurückzubringen.

2. Vorrichtung nach Anspruch 1, dadurch gekennzeichnet, daß die Verbindung mit Lastunterbrechung einen fest mit der Schwingstruktur verbundenen Hebelarm (36) mit zwei radialen entgegengesetzten Flächen, die zwei im wesentlichen kugelförmige Ausbildungen (54, 55) aufweisen, und zwei fest mit der festen Struktur verbundene verdrängbare Anschläge (57, 58) enthält, die zu beiden Seiten des Hebelarms (36) angeordnet sind, um auf die Ausbildungen derart einzuwirken, daß die Schwingstruktur in der gespannten Stellung gehalten wird, solange das vom Anschlagorgan ausgeübte Drehmoment unter einer vorbestimmten Schwelle liegt.

3. Vorrichtung nach Anspruch 1, dadurch gekennzeichnet, daß die Verbindung mit Lastunterbrechung zwei verdrängbare Anschläge (57, 58) aufweist, die auf den Hebelarm (36) montiert sind und mit zwei Ausbildungen der festen Struktur zusammenwirken, um die Schwingstruktur in der gespannten Stellung zu halten, solange das vom Anschlagorgan (46, 47) ausgeübten Drehmoment unter einer vorbestimmten Schwelle liegt.

4. Vorrichtung nach einem der vorhergehenden Ansprüche, dadurch gekennzeichnet, daß die verdrängbaren Anschläge aus Kugeln (57, 58) bestehen, die von elastischen Mitteln (59, 60) beaufschlagt werden.

5. Vorrichtung nach einem der vorhergehenden Ansprüche, dadurch gekennzeichnet, daß die kugelförmigen Ausbildungen aus Kugeln bestehen, die teilweise in einem zylindrischen Sitz angeordnet sind und eine kugelförmige Kalotte aufweisen, die aus dem Sitz vorsteht.

6. Vorrichtung nach einem der vorhergehenden Ansprüche, dadurch gekennzeichnet, daß der zweite Hebelarm aus einem Flansch (32, 33) in Form eines Kreisausschnitts besteht, dessen radiale Fläche (38) auf der Seite des beweglichen Organs einen Ausschnitt (39) aufweist, dessen beide entgegengesetzten Ränder (40, 41) die Nockenflächen bilden.

7. Vorrichtung nach Anspruch 6, dadurch gekennzeichnet, daß der kreisförmige Rand des Flanschs (32, 33) Anzeigen (rote Farbe, grüne Farbe) betreffend den Zustand des Schalters aufweist, wobei diese Anzeigen durch ein in der festen Struktur vorgesehenes Fenster (37) hindurch sichtbar sind.

8. Vorrichtung nach einem der vorhergehenden Ansprüche, dadurch gekennzeichnet, daß das bewegliche Organ einen Einstellindex (50, 51) trägt, der durch ein in der festen Struktur vorgesehenes Fenster (52) sichtbar ist.

9. Vorrichtung nach einem der vorhergehenden Ansprüche, dadurch gekennzeichnet, daß die Befestigung des Seils am beweglichen Organ mittels eines Seilspanners (6) erfolgt.

10. Vorrichtung nach Anspruch 9, dadurch gekennzeichnet, daß der Seilspanner ein zylindrisches Teil (19) aufweist, das in zwei koaxialen Bohrungen drehbar montiert ist, die in den beiden parallelen Schenkeln (20, 21) eines mit dem beweglichen Organ fest verbundenen Bügels ausgebildet sind, und um den das Seil sich aufrollen kann, wobei dieses zylindrische Teil axial an den Schenkeln gehalten wird und eine axiale Verlängerung (23) mit einer Gewindebohrung aufweist, um die eine Rastenhülse angeordnet ist, deren radiale mit Rasten versehene Fläche (25) gegen eine ringförmige mit Rasten versehene Zone eines der beiden Schenkel (20, 21) anliegt, wobei die Anlegekraft der beiden Rasten vom Kopf einer Schraube (26) gewährleistet wird, die in die Gewindebohrung geschraubt wird.

11. Vorrichtung nach Anspruch 9, dadurch gekennzeichnet, daß der Seilspanner ein zylindrisches Teil (19) aufweist, das in zwei koaxialen Bohrungen drehbar montiert ist, die in den beiden parallelen Schenkeln (20, 21) eines mit dem beweglichen Organ fest verbundenen Bügels ausgebildet sind, und um den das Seil sich aufrollen kann, wobei dieses zylindrische Teil axial an den Schenkeln gehalten wird und eine axiale Verlängerung (23) aufweist, die mit einem Schieberad (70) fest verbunden ist, das mit einer Feder (72) zusammenwirkt, um eine Blockierung des zylindrischen Teils (19) in Drehrichtung zu gewährleisten.

12. Vorrichtung nach einem der vorhergehenden Ansprüche, dadurch gekennzeichnet, daß das bewegliche Organ aus einem Wagen (12) besteht, der auf die feste Struktur mittels Kugellagern (B1-B4, B'1-B'4) montiert ist.

## Claims

1. A cable-operated device to perform emergency stops on an installation, this device using a spring (5) of which one end is retained by a fixed structure (1) and of which the other end is integral with a mobile mounting (12) guided on said structure and to which is attached the end of a control cable, and a transmission device comprising an oscillating structure which controls a switch (I) in response to a displacement of the mobile mounting (12) subsequent to a pull exerted on the cable or to a loosening of the latter, characterized in that said oscillating structure is mounted pivotably on the fixed structure about an axis (30) perpendicular to the direction of displacement of the mobile mounting (12) between an activated position and a tilted position, this oscillating structure comprising:
- a first lever arm (35) arranged so as to be able to come to bear against the control device (11) of the switch (I) when the oscillating structure is in the tilted position,
- at least a second lever arm comprising two axially distant cam surfaces (40, 41) opposite one another which cooperate with a stop mechanism (46, 47) that is integral with the mobile mounting (12) to tilt the oscillating structure from its activated position to its tilted position, subsequent to a displacement of the mobile mounting (12) in excess of a minimum stroke, irrespective of the direction of said displacement,
- a load break link (54-62) between said oscillating structure and the fixed structure (1) which prevents tilting of the oscillating structure as long as the value of the torque exerted by the stop device is below a predetermined threshold which releases the oscillating structure when this threshold is exceeded, and which then prevents the return of this structure into the activated position,
- a reactivating means (65) capable of acting on the oscillating structure to bring it back to the idle position, contrary to the action exerted by the load break link.

2. Device as claimed in claim 1, characterized in that the load break link comprises a lever arm (36) integral with the oscillating structure of which two opposite radial sides have two respective substantially spherical conformations (54, 55), and two effaceable stops (57, 58) integral with the fixed structure, arranged on both sides of said lever arm (36) so as to act on said conformations in order to maintain the oscillating structure in the activated position as long as the torque exerted by said stop device is below a predetermined threshold.

3. Device as claimed in claim 1, characterized in that the load break structure comprises two effaceable stops (57, 58) mounted on the lever arm (36) and cooperating with two respective conformations of the fixed structure, to maintain the oscillating structure in the activated position as long as the torque exerted by said stop device (46, 47) is below a predetermined threshold.

4. Device as claimed in any one of the previous claims, characterized in that the effaceable stops consist of balls (57, 58) acted on by an elastic means (59, 60).

5. Device as claimed in any one of the previous claims, characterized in that the spherical conformations consist of balls partially housed in a cylindrical receptacle and having a spherical cap protruding from said receptacle.

6. Device as claimed in any one of the previous claims, characterized in that said second lever arm consists of a flange (32, 33) in the shape of a sector of a circle of which the radial face (38) situated on the mobile mounting side comprises an indentation (39) of which two opposite edges (40, 41) constitute said cam surfaces.

7. Device as claimed in claim 6, characterized in that the circular edge of said flange (32, 33) bears indications (red color, green color) relating to the status of said switch, these indications being visible through a window (37) provided in the fixed structure.

8. Device as claimed in any one of the previous claims, characterized in that said mobile mounting comprises an adjustment index (50, 51) that can be seen through a window (52) provided in the fixed structure.

9. Device as claimed in any one of the previous claims, characterized in that the cable is attached to the mobile mounting by means of a cable tension device (6).

10. Device as claimed in claim 9, characterized in that the cable tension device comprises a cylindrical part (19), mounted rotatably in two coaxial bores made in the two parallel wings (20, 21) of a cover integral with the mobile mounting and about which the cable can be wound, this cylindrical part being axially retained on said wings and comprising an axial extension (23) fitted with a tapped bore, about which is arranged a notch sleeve of which one notched radial side (25) comes to bear against a notched annular zone of one of the two wings (20, 21), the force of application of the two notchings being ensured by the head of a screw (26) screwed into said tapped bore.

11. Device as claimed in claim 9, characterized in that the cable tension device comprises a cylindrical part (19) mounted rotatably in two coaxial bores made in the two parallel wings (20, 21) of a cover integral with the mobile mounting about which the cable can be wound, this cylindrical part being axially retained on said wings and comprising an axial extension (23) integral with a ratchet wheel (70) cooperating with a spring (72) to block any rotation of the cylindrical part (19).

12. Device as claimed in any one of the previous claims, characterized in that said mobile mounting consists of a trolley (12) mounted on the fixed structure by means of ball-bearings (B₁-B₄, B'₁-B'₄).
